# EUROPEAN PATENT SPECIFICATION

(11) **EP 2 641 938 B1**
(45) Date of publication and mention of the grant of the patent: **11.08.2021**
(21) Application number: 11841722.9
(22) Date of filing: 15.11.2011
(51) Int. Cl.: C08L 67/02, C08G 63/87, C08K 5/5333, C08G 63/84

(54) **POLYESTER RESIN**
POLYESTERHARZ
RÉSINE POLYESTER

(30) Priority: 16.11.2010 JP 2010255954
(43) Date of publication of application: 25.09.2013
(73) Proprietor: Toyobo Co., Ltd., Osaka-shi Osaka 530-8230 (JP)
(72) Inventor: KITA,Toshiyuki, Osaka 530-8230 (JP); MAEDA,Kunihiro, Osaka 530-8230 (JP); TOGAWA,Keiichiro, Osaka 530-8230 (JP)
(74) Representative: Müller-Boré & Partner Patentanwälte PartG mbB
(86) International application number: PCT/JP2011/076241
(87) International publication number: WO 2012/067083

(56) References cited:
- EP-A1- 1 932 867
- JP-A- 2002 249 562
- JP-A- 2003 040 991
- JP-A- 2005 325 163
- JP-A- 2006 282 800
- JP-A- 2006 282 800
- JP-A- 2006 282 801
- JP-A- 2009 503 177
- None

## Description

The present invention relates to a polyester resin having excellent transparency, and more specifically to a polyester resin in which an aluminum compound and a phosphorus compound are used as main components of a catalyst.

Polyesters typified by polyethylene terephthalate (PET), polybutylene terephthalate (PBT), polyethylene naphthalate (PEN) and the like are excellent in mechanical characteristics and chemical characteristics, and are used in broad fields including, for example, fibers for clothing and industrial materials, films and sheets for packaging, magnetic tapes, optics and the like, bottles which are hollow-molded products, casings for electric and electronic components, and other engineering plastic molded products, depending on the characteristics of each polyester. In particular, since bottles formed of saturated polyesters such as PET are excellent in mechanical strength, heat resistance, transparency and gas barrier property, they are widely used as containers for packing beverages such as juice, carbonated beverages and soft drinks, and containers for eye drops and cosmetics.

Conventionally, as a polyester polycondensation catalyst used in polycondensation of such polyesters, antimony or germanium compounds are widely used. Although antimony trioxide is a catalyst that is inexpensive and has excellent catalyst activity, when it is used as a main component, namely it is used in such an adding amount that realizes a practical polymerization rate, metal antimony precipitates at the time of polycondensation, so that there is a problem that darkening and a contaminant occur in the polyester. Therefore, a polyester containing no antimony or a polyester not containing antimony as a main component of a catalyst is demanded.

The above contaminant in a polyester will cause the following problems.
(1) A contaminant in a polyester for a fiber causes stain in a mouth piece at the time of spinning, and causes deterioration in strength of the product fiber itself.
   Therefore, a polyester polymerization catalyst leading to little generation of a contaminant is requested in the production of a polyester fiber from the viewpoint of operability and quality.
(2) In a polyester for a film, a precipitate will be a contaminant in the polyester, and not only causes roll staining at the time of film formation, but also causes a surface defect in the film.
   Therefore, a polyester polymerization catalyst leading to little generation of a contaminant is requested also in the production of a polyester film from the viewpoint of operability and quality.
(3) When a polyester containing a contaminant is used as a material for a hollow-molded product or the like, it is difficult to obtain a hollow-molded product with excellent transparency.

As a novel polycondensation catalyst that responds to the above requests, a catalyst system composed of an aluminum compound and a phosphorus compound is disclosed and attracts attention (for example, see Patent Documents 1 to 4).

However, in the catalyst system composed of an aluminum compound and a phosphorus compound, there is still a problem that a catalyst contaminant occurs. For solving this problem, there is known a technique of reducing generation of a contaminant coming from a polycondensation catalyst by devising the method for preparing an ethylene glycol solution of an aluminum compound and a phosphorus compound used as a catalyst, or by adding a phosphorus compound after completion of an ester reaction (see, for example, Patent Documents 5 and 6).

Further, PET is employed as a material of containers for carbonated beverages, juice, mineral water and so on for its excellent characteristics such as transparency, mechanical strength, heat resistance, and gas barrier property. Among these, in a heat resistant bottle designed to be filled with a content at high temperature, there is widely employed a technique of preventing deformation of a mouth plug part at the time of filling by crystallizing the mouth plug part by heating to impart heat resistance to the mouth plug part (for example, see Patent Documents 7 and 8).

In this mouth plug part crystallization technique, the time and the temperature for crystallization largely influence on the productivity, and PET with high crystallization speed that can be treated at low temperature in a short time is preferred. On the other hand, as to the body part, it is requested to be transparent even after a heat treatment at the time of molding so that the charged amount of the bottle content is visible from outside, and contradictory characteristics are required for the mouth plug part and for the body part. When the crystallization speed is too fast or too slow, crystallization is non-uniform, so that distortion can occur in the mouth plug part, or the dimension of the mouth plug part gets off the design, leading to leakage of the filling liquid.

For achieving an optimum crystallization speed of the mouth plug part, a product having a crystallization temperature at the time of elevating the temperature (hereinafter also referred to as a "Tc1") of 150 to 170°C, particularly 160 to 165°C is desired from the market. The above polycondensation catalyst system composed of an aluminum compound and a phosphorus compound is known to provide PET having a Tc1 falling within the above range by reducing a contaminant as described in Patent Documents 5 and 6, and also a technique of obtaining PET having a stable Tc1 by sectioning a distillate of ethylene glycol that is circulated and recycled in continuous polymerization production is proposed (for example, see Patent Document 9).

However, when continuous polymerization production on a commercial scale is conducted, for example, production is continuously conducted for more than several days at a production amount of greater than or equal to 1 ton per hour, Tc1 largely changes with the change in the production condition or the like, and it is difficult to obtain PET having a stable Tc1 also with the method as described above.

On the other hand, as a technique of increasing the crystallization speed of the mouth plug part by decreasing Tc1 of PET, it is known to combine a slight amount of a crystalline resin such as polyethylene or polypropylene serving as a crystal nucleating agent (for example, see Patent Document 10). In particular, the technique of bringing PET chips into contact with a crystalline resin member of polyethylene or polypropylene enables a ppb amount of a crystal nucleating agent resin to be conveniently contained in industrial production (see, for example, Patent Documents 11 and 12).

However, when it was attempted to adjust Tc1 to 160 to 165°C by adding a slight amount of a crystalline resin into PET obtained by the technique of Patent Document 5, 6, 9 or the like, it was difficult to obtain a PET resin having a stable Tc1 possibly because Tc1 which is the crystallization temperature at the time of evaluating the temperature is less than or equal to 170°C.

JP 2006-282800 A describes a polyester film slight in cyclic trimer content and suppressed in the decline of adhesiveness and transparency attributable to the cyclic trimer. EP 1 932 867 A1 describes a polyester, a process for the production of the polyester, and a polyester molded aricle.
PTD 1: Japanese Patent Laying-Open No. 2001-131276
PTD 2: Japanese Patent Laying-Open No. 2001-163963
PTD 3: Japanese Patent Laying-Open No. 2001-163964
PTD 4: Japanese Patent Laying-Open No. 2002-220446
PTD 5: WO2005/075539
PTD 6: Japanese Patent Laying-Open No. 2005-187558
PTD 7: Japanese Patent Laying-Open No. 55-79237
PTD 8: Japanese Patent Laying-Open No. 58-110221
PTD 9: Japanese Patent Laying-Open No. 2006-290909
PTD 10: Japanese Patent Laying-Open No. 9-151308
PTD 11: Japanese Patent Laying-Open No. 9-71639
PTD 12: Japanese Patent Laying-Open No. 2002-249573

As described above, a polyester having a Tc1 of less than or equal to 170°C faces a problem that crystallization of the bottle mouth plug part is difficult to be controlled when it is used for a heat resistant bottle. Similarly, it also has a problem of whitening at the time of heating in sheet molding. Further, we found another problem that even when Tc1 is greater than or equal to 170°C, a crystal is fixed before it is sufficiently drawn at the time of molding when the crystallization temperature at the time of reducing the temperature (hereinafter, also referred to as a "Tc2") is high, and strength of the molded body may be impaired. Then, it was found that Tc1 as well as Tc2 should be controlled for obtaining a molded body having physical characteristics required in the market while keeping transparency of the molded body high. As will be described later, for controlling Tc1 and Tc2, it is necessary to control the amount of degradation products of the phosphorus compound used as a polymerization catalyst, and the amount of an aluminum-based contaminant coming from the aluminum compound used as a polymerization catalyst, however, this control has not been achieved by a conventional technique.

It is a primary object of the present invention to provide a polyester that allows easy control of crystallization of a mouth plug part when it is used for a heat resistant bottle, and is less susceptible to whitening at the time of heating in molding when it is used for a sheet for molding, while keeping the transparency of the molded body high when it is continuously polymerized and produced on a commercial scale.

That is, the present invention provides a polyester resin obtained by using an aluminum compound and a phosphorus compound as a polymerization catalyst, containing more than or equal to 85% by mol of an ethylene terephthalate structural unit, wherein the content of an aluminum-based contaminant is less than or equal to 100 ppb, and the content of a phosphorus compound represented by the following (B) structure is 5 to 11 ppm, with respect to the mass of the polyester resin, wherein the phosphorous compound represented by (B) is a thermolysis product at the time of polymerization of the polyester using an aluminum compound and a phosphorous compound represented by the following chemical formula (A) as a catalyst. 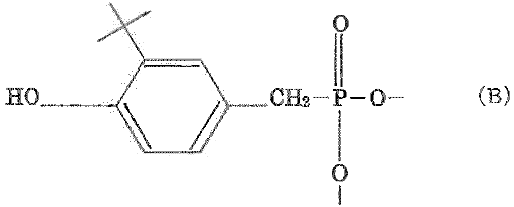 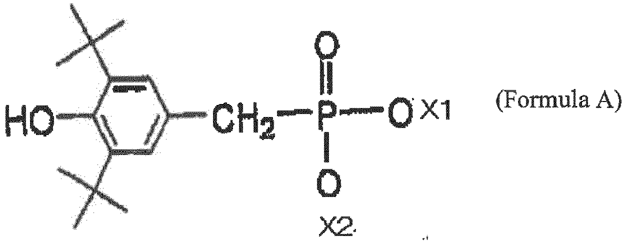 (wherein in (Formula A), X1 and X2 each represent hydrogen, an alkyl group having 1 to 4 carbon atoms, or a metal having a valence of greater than or equal to 1), and wherein the polyester resin has a Tc1 of greater than or equal to 170°C and a Tc2 of less than or equal to 175°C, wherein Tc1 is the crystallization temperature at the time of elevating the temperature, and Tc2 is the crystllization temperature at the time of reducing the temperature.

In the above, the phosphorus compound used as a polymerization catalyst is a phosphorus compound represented by the above chemical formula (Formula A), and the quantity of phosphorus atoms in all the phosphorus compounds including the phosphorus compound represented by the following chemical formula (Formula A), and the phosphorus compound represented by the foregoing (B) structure which is a thermolysis product thereof contained in the polyester resin preferably is 20 to 65 ppm with respect to the mass of the polyester resin.

In the above, preferably, the ratio P/Al (molar ratio) between aluminum atoms in the aluminum compound, and phosphorus atoms in all the phosphorus compounds including the phosphorus compound represented by the chemical formula (Formula A) and the phosphorus compound represented by the foregoing (B) structure which is a thermolysis product thereof contained in the polyester resin is 1.4 ≤ P/Al ≤ 100.

The polyester resin produced by the present invention is advantageous in that a molded body has high transparency, crystallization of a mouth plug part can be easily controlled when it is used for a heat resistant bottle, and whitening is less likely occur in heating at the time of molding when it is used for a sheet for molding.
Fig. 1 is a plan view of a stepped molded plate used for evaluation of the polyester resin of the present invention.
Fig. 2 is a lateral view of a stepped molded plate used for evaluation of the polyester resin of the present invention.

The present invention will be described more specifically.

The polyester resin of the present invention contains less than or equal to 100 ppb of an aluminum-based contaminant with respect to the mass of the polyester resin. The aluminum-based contaminant comes from the aluminum compound used as a polymerization catalyst, and is a contaminant that is insoluble in the polyester resin. The amount of aluminum-based contaminant is quantified in the following manner.

### [Amount of aluminum-based contaminant]

30 g of a polyester pellet and 300 mL of a para-chlorophenol/tetrachloroethane (3/1: weight ratio) mixed solution are put into a round-bottom flask equipped with a stirrer, and the pellet is stirred and dissolved in the mixed solution at 100 to 105°C for 2 hours. The solution is allowed to cool to room temperature, and the whole quantity is passed through a membrane filter of polytetrafluoroethylene having a diameter of 47 mm and a pore size of 1.0 µm (PTFE membrane filter, product name: T100A047A available from Advantec) under the pressure of 0.15 MPa to filter off a contaminant. The effective filtration diameter is 37.5 mm. After completion of the filtration, the filter is subsequently washed with 300 mL of chloroform, and dried at 30°C under reduced pressure for a day and a night. The filtering face of the membrane filter is observed by a scanning fluorescent X-ray analyzer (ZSX100e available from RIGAKU, Rh tubular lamp 4.0 kW) to quantify an aluminum element amount. Quantification is conducted for the part of 30 mm in diameter in the center of the membrane filter. The calibration curve of the fluorescent X-ray analysis is determined by using a polyethylene terephthalate resin whose aluminum element content is known, and an apparent aluminum element amount is indicated by ppm. Measurement is conducted by measuring the Al-Kα ray intensity under the condition of PHA (pulse height analyzer) 100-300 at an X-ray output of 50 kV-70 mA, using pentaerythritol as a dispersive crystal, and a PC (proportional counter) as a detector. The aluminum element amount in the polyethylene terephthalate resin for calibration curve is quantified by high-frequency inductively-coupled plasma emission spectrometry.

Since the apparent aluminum element amount (ppm) is a content (captured amount) in the membrane filter (mass M: 0.0392g) of the area corresponding to the effective filtration diameter, the value obtained by multiplying the obtained apparent aluminum element amount (ppm) by M, followed by division by polyester pellet mass (30 g) is referred to as an amount of aluminum-based contaminant (unit: ppb).

The amount of aluminum-based contaminant measured by the above evaluation method is more preferably less than or equal to 70 ppb. Less than or equal to 50 ppb is further preferred. Less than or equal to 30 ppb is particularly preferred. The amount of aluminum-based contaminant of more than 100 ppb is not preferred because high transparency intended by the present application is not achieved due to a fine contaminant that is insoluble in the polyester.

A preferred lower limit of the amount of aluminum-based contaminant measured by the above evaluation method is greater than or equal to 10 ppb. Making the amount of aluminum-based contaminant less than 10 ppb is not realistic because it is necessary to thoroughly purify the aluminum compound used as a catalyst without thought of the cost, or to reduce the adding amount of the aluminum compound at the expense of the catalyst activity.

The amount of aluminum-based contaminant measured by the above evaluation method is an ultra-trace amount in the level of ppb. Deterioration in transparency of a molded body due to such an ultra-trace amount of contaminant would be attributable to the fact that a void is formed at the interface between the polyester and the aluminum-based contaminant due to molding stress at the time of molding because the aluminum-based contaminant measured by the above method has low affinity with the polyester, and the void causes scattering of light to lead to deterioration in transparency of the molded body.

The polyester resin of the present invention contains 5 to 11 ppm, with respect to the polyester resin mass, of a phosphorus compound represented by the following (B) structure.

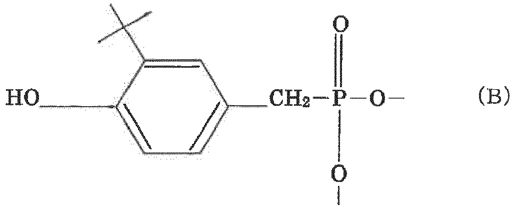

While the one having (B) structure is expected to exist in the form of an Al salt in the resin, it becomes "-PO(OH)₂" by addition of phosphoric acid in the measurement, and the amount of the phosphorus compound represented by (B) structure is a value assuming that the "-P-O-" moiety has become "-P-OH".

The phosphorus compound represented by (B) structure exists in the polyester as a thermolysis product at the time of polymerization of the polyester using the aluminum compound and the phosphorus compound represented by the chemical formula (Formula A) as a catalyst.

Examinations made by the present inventors revealed that the phosphorus compound represented by (B) structure in the polyester specifically influences on Tc1, and when the content is greater than or equal to a specific amount, Tc1 deteriorates. The content of the phosphorus compound represented by (B) structure is preferably less than or equal to 10.5 ppm, more preferably less than or equal to 10 ppm, further preferably less than or equal to 9.5 ppm, and most preferably less than or equal to 9 ppm. Since the phosphorus compound represented by (B) structure is generated by heat at the time of catalyst preparation or polycondensation, it is basically difficult to avoid the containment. The lower limit of the content of the phosphorus compound represented by (B) structure is practically 5 ppm, more preferably greater than or equal to 6 ppm, particularly greater than or equal to 6.5 ppm, and most preferably greater than or equal to 7 ppm.

According to the present invention, the polyester resin has a TC1 of greater than or equal to 170°C. When the content of the phosphorus compound represented by (B) structure is more than 11 ppm, Tc1 deteriorates, and it is sometimes difficult to make Tc1 greater than or equal to 170°C.

In such a case, transparency deteriorates, and it may be difficult to control the crystallization of a mouth plug part, and the control range may be narrow. Tc1 is more preferably greater than or equal to 171°C, further preferably greater than or equal to 172°C, particularly preferably greater than or equal to 173°C, and most preferably greater than or equal to 174°C. The upper limit of Tc1 is practically preferably 195°C, more preferably 190°C, further preferably 187°C, particularly preferably 186°C, and most preferably 185°C.

Also, an aluminum-based contaminant can cause deterioration in Tc1. In this case, also Tc2 increases concurrently. Tc2 is less than or equal to 175°C, more preferably less than or equal to 174°C, further preferably less than or equal to 173°C, particularly preferably less than or equal to 172°C, and most preferably less than or equal to 171°C. The lower limit of Tc2 is practically preferably 145°C, more preferably 150°C, further preferably 155°C, particularly preferably 160°C, and most preferably 165°C.

A measure for making the amount of aluminum-based contaminant less than or equal to 100 ppb, and making the phosphorus compound represented by (B) structure 5 to 11 ppm will be described below. For making the phosphorus compound represented by (B) structure 5 to 11 ppm, the temperature time product in the polycondensation step is particularly important.

Further, the detail of the polyester resin of the present invention will be described.

### 1. Composition of polyester resin

The polyester resin is a polyester containing greater than or equal to 85% by mol of an ethylene terephthalate unit, and is a linear polyester containing preferably greater than or equal to 90% by mol, more preferably greater than or equal to 95% by mol and further preferably greater than or equal to 97% by mol of an ethylene terephthalate unit.

The "polyester resin" in the present invention means the one in which a polymerization catalyst and a degradation product thereof are contained in the polyester as a single chemical species (such as polyethylene terephthalate). From this point, it is also recognized as a "composition", however, in the present application, it is referred to as a "polyester resin" because the amount of the catalyst component or the like is very small. Various additives may be contained in the polyester resin of the present invention unless the effect of the present invention is impaired.

As a dicarboxylic acid used as a copolymerization component when the polyester is a copolymer, an aromatic dicarboxylic acid such as isophthalic acid, orthophthalic acid, 2,6-naphthalene dicarboxylic acid, 1,3-naphthalene dicarboxylic acid, 1,4-naphthalene dicarboxylic acid, 1,5-naphthalene dicarboxylic acid, 2,7-naphthalene dicarboxylic acid, diphenyl-4,4-dicarboxylic acid, 4,4'-biphenylether dicarboxylic acid, 1,2-bis(phenoxy)ethane-p,p'-dicarboxylic acid or anthracene dicarboxylic acid, an aliphatic dicarboxylic acid or an alicyclic dicarboxylic acid such as oxalic acid, malonic acid, succinic acid, glutaric acid, adipic acid, pimelic acid, suberic acid, azelaic acid, sebacic acid, decane dicarboxylic acid, dodecane dicarboxylic acid, tetradecane dicarboxylic acid, hexadecane dicarboxylic acid, 1,3-cyclobutane dicarboxylic acid, 1,3-cyclopentane dicarboxylic acid, 1,2-cyclohexane dicarboxylic acid, 1,3-cyclohexane dicarboxylic acid, 1,4-cyclohexane dicarboxylic acid, 2,5-norbornane dicarboxylic acid, dimer acid, or hydrogenated dimer acid, or an unsaturated dicarboxylic acid such as fumaric acid or itaconic acid may be used.

The dicarboxylic acid as recited above can be used in the range of preferably 0 to 15% by mol, more preferably 0.5 to 10% by mol, further preferably 0.8 to 7.5% by mol, particularly preferably 0.9 to 5.0% by mol, and most preferably 1.0 to 2.5% by mol in the total carboxylic acid components.

As a glycol used as a copolymerization component when the polyester is a copolymer, for example, an aliphatic glycol such as propylene glycol, 1,3-propanediol, 1,4-butylene glycol, 1,2-butylene glycol, 1,3-butylene glycol, 2,3-butylene glycol, 1,5-pentanediol, 1,6-hexanediol, 1,2-cyclohexanediol, 1,3-cyclohexanediol, 1,4-cyclohexanediol, 1,2-cyclohexane dimethanol, 1,3-cyclohexane dimethanol, 1,4-cyclohexane dimethanol, 1,4-cyclohexane diethanol, 3-methyl-1,5-pentanediol, 2-methyl-1,5-pentanediol, 2-methyl-1,3-propanediol, 2-ethyl-1,3-propanediol, neopentyl glycol, 2-ethyl-2-methyl-1,3-propanediol, 2,2-diethyl-1,3-propanediol, 2-methyl-2-n-butyl-1,3-propanediol, 2-n-butyl-2-ethyl-1,3-propanediol, 2,2-di-n-butyl-1,3-propanediol, 2-ethyl-2-n-hexyl-1,3-propanediol, 2,2-di-n-hexyl-1,3-propanediol, 1,9-nonanediol, 1,10-decanediol, 1,12-dodecanediol, diethylene glycol, triethylene glycol, polyethylene glycol, polytrimethylene glycol, polytetramethylene glycol or polypropylene glycol, or an aromatic glycol such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, or an alkylene oxide adduct of bisphenol A can be recited.

The glycol as recited above can be used in the range of preferably 0 to 15% by mol, more preferably 0.5 to 10% by mol, further preferably 0.8 to 7.5% by mol, particularly preferably 0.9 to 5.0% by mol, and most preferably 1.0 to 2.5% by mol in the total glycol components.

The intrinsic viscosity of the polyester resin is preferably 0.35 to 1.30 dl/g, more preferably 0.40 to 1.00 dl/g, further preferably 0.45 to 0.90 dl/g, particularly preferably 0.50 to 0.85 dl/g, and most preferably 0.55 to 0.80 dl/g. In other words, when the intrinsic viscosity is lower than this range, mechanical strength and shock resistance of the container are insufficient, whereas when it is higher than the above range, injection molding into a bottomed preform tends to be difficult.

### 2. Catalyst of polyester resin

As the aluminum compound forming the polyester polymerization catalyst according to the present invention, known aluminum compounds may be used without any limitation.

Concrete examples of the aluminum compound include organic aluminum compounds such as aluminum acetate, basic aluminum acetate, aluminum lactate, aluminum chloride, aluminum hydroxide, aluminum hydroxychloride, aluminum acetyl acetonate, and aluminum oxalate, and partial hydrolysates thereof. Among these, carboxylic acid salts, inorganic acid salts and chelate compounds are preferred, and among these, aluminum acetate, basic aluminum acetate, aluminum lactate, aluminum chloride, aluminum hydroxide, aluminum hydroxychloride and aluminum acetyl acetonate are more preferred, and aluminum acetate, basic aluminum acetate, aluminum chloride, aluminum hydroxide and aluminum hydroxychloride are further preferred, and aluminum acetate and basic aluminum acetate are most preferred.

The use amount of the aluminum compound in terms of aluminum atom used as the polyester polymerization catalyst according to the present invention is selected so that preferably 1 to 60 ppm, more preferably 2 to 50 ppm, further preferably 3 to 40 ppm, particularly preferably 5 to 30 ppm, and most preferably 10 to 20 ppm remains with respect to the total mass of the obtained polyester resin.

When the use amount is less than the above range, the catalyst activity may be deficient, whereas when the use amount is more than the above range, an aluminum-based contaminant may be generated. This may lead to decrease in Tc1 and increase in Tc2.

The phosphorus compound forming the polyester polymerization catalyst is a phosphorus compound having a hindered phenol structure as represented by the following chemical formula (Formula A).

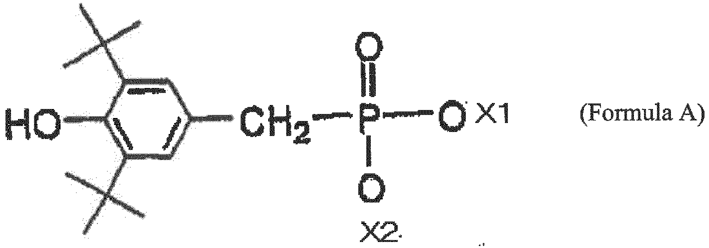

In (Formula A), X1 and X2 each represent hydrogen, an alkyl group having 1 to 4 carbon atoms, or a metal having a valence of greater than or equal to 1.

Also, a metal for X1 may have a valence of greater than or equal to 2 and X2 does not have to exist. Further, anions corresponding to the redundant valence of metal may be arranged with respect to the phosphorus compound.

As the metal, Li, Na, K, Ca, Mg, and Al are preferred.

Concrete examples of the compound represented by the chemical formula (Formula A) include phosphorus compounds represented by the chemical formulas (Chemical formula 1) and (Chemical formula 2).

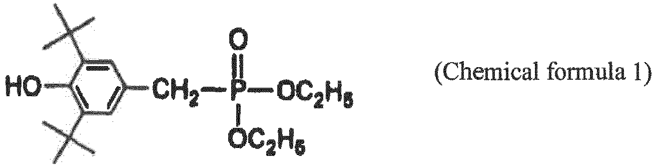

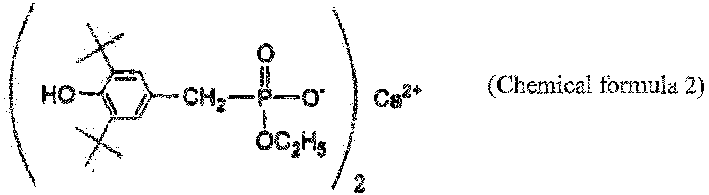

As a compound represented by the chemical formula (Chemical formula 1), Irgamod 295 (available from BASF) is commercially available, and as a compound represented by the chemical formula (Chemical formula 2), Irgamod 195 (available from BASF) is commercially available and usable.

The use amount of the phosphorus compound in terms of phosphorus atom is selected so that preferably 20 to 65 ppm, more preferably 25 to 60 ppm, further preferably 30 to 55 ppm, particularly preferably 35 to 52 ppm, and most preferably 40 to 50 ppm remains with respect to the total mass of the obtained polyester resin.

As to the phosphorus compound, however, about 10 to 30% of the adding amount is removed outside the system depending on the condition, when it is placed in a reduced pressure environment at the time of polyester polymerization. Accordingly, it is actually necessary to determine the adding amount after conducting several trial experiments under different conditions, and knowing the residual percentage of the phosphorus compound in the polyester.

When the adding amount of the phosphorus compound is small, catalyst activity may be deficient, or an aluminum-based contaminant may be generated, and too large an amount may cause decrease in catalyst activity as a polyester polycondensation catalyst, and the tendency of decrease changes, for example, with the adding amount of the aluminum compound. When the catalyst activity is deficient, as will be described later, a larger temperature time product is required in polycondensation and thus the amount of degradation product of the phosphorus compound increases, so that it is sometimes difficult to make Tc1 greater than or equal to 170°C.

When the adding amount of the phosphorus compound is too large, as will be described later, the amount of degradation product of the phosphorus compound increases, so that it is sometimes difficult to make Tc1 greater than or equal to 170°C.

The ratio P/Al (molar ratio) of phosphorus atoms in all the phosphorus compounds including the phosphorus compound represented by the chemical formula (Formula A) contained in the polyester resin and a thermolysis product thereof, to aluminum atoms in the aluminum compound is preferably 1.4 ≤ P/Al ≤ 100, more preferably 1.5 ≤ P/Al ≤ 50, further preferably 1.6 ≤ P/Al ≤ 20, particularly preferably 1.7 ≤ P/Al ≤ 10, and most preferably 1.8 ≤ P/Al ≤ 5.

When the P/Al is too low, catalyst activity as a polyester polycondensation catalyst may be deteriorated, or generation of an aluminum-based contaminant may be caused, so that decrease in Tc1 and increase in Tc2 may be caused, and too high a P/Al can cause deterioration in catalyst activity as a polyester polycondensation catalyst. When the catalyst activity deteriorates, it is sometimes difficult to make Tc1 greater than or equal to 170°C. When a large amount of aluminum-based contaminant is generated, it becomes difficult to make Tc2 less than or equal to 175°C.

The polycondensation catalyst according to the present invention may contain another polycondensation catalyst such as an antimony compound, a germanium compound or a titanium compound in such an adding amount that will not lead to a problem in the product regarding characteristics, workability, color tone and the like of the polyester, however, it is preferred that such a catalyst is not substantially contained.

When an antimony compound is contained, it is preferably contained in an amount of less than or equal to 30 ppm in terms of antimony atom, with respect to the polyester obtained by polycondensation. It is more preferably 20 ppm or less, further preferably 10 ppm or less, and particularly preferably 5 ppm or less. An adding amount of antimony of more than 30 ppm is not preferred because metal antimony precipitates, and Tc1 and Tc2 depart from the above ranges.

When a germanium compound is contained, it is preferably contained in an amount of less than or equal to 10 ppm in terms of germanium atom, with respect to the polyester obtained by polycondensation. It is more preferably less than or equal to 5 ppm, further preferably less than or equal to 3 ppm, and particularly preferably less than or equal to 2 ppm. An adding amount of germanium of more than 10 ppm is not preferred because a disadvantage in the cost arises.

When a titanium compound is contained, it is preferably contained in an amount of less than or equal to 3 ppm in terms of titanium atom, with respect to the polyester obtained by polycondensation. It is more preferably less than or equal to 2 ppm, and further preferably less than or equal to 1 ppm. An adding amount of titanium of more than 3 ppm is not preferred because coloring of the obtained polyester is significant, and heat stability significantly deteriorates.

When a sodium compound is contained, it is preferably contained in an amount of less than or equal to 20 ppm in terms of sodium atom, with respect to the polyester obtained by polycondensation. It is more preferably less than or equal to 10 ppm, further preferably less than or equal to 5 ppm, and particularly preferably less than or equal to 2 ppm. An adding amount of sodium of more than 20 ppm is not preferred because the haze when the obtained polyester is molded deteriorates, and also hydrolysis resistance deteriorates.

When a magnesium compound is contained, it is preferably contained in an amount of less than or equal to 100 ppm in terms of magnesium atom, with respect to the polyester obtained by polycondensation. It is more preferably less than or equal to 50 ppm, further preferably less than or equal to 20 ppm, and particularly preferably less than or equal to 10 ppm. An adding amount of magnesium of more than 100 ppm is not preferred because heat oxidation stability of the obtained polyester is impaired.

When a lithium compound is contained, it is preferably contained in an amount of less than or equal to 50 ppm in terms of lithium atom, with respect to the polyester obtained by polycondensation. It is more preferably less than or equal to 20 ppm, further preferably less than or equal to 10 ppm, and particularly preferably less than or equal to 5 ppm. An adding amount of lithium of more than 50 ppm is not preferred because haze at the time when the obtained polyester is molded deteriorates, and also hydrolysis resistance deteriorates, although not to the extent of the sodium compound.

### 3. Preparation of catalyst

When an aluminum compound and a phosphorus compound are used as a catalyst, it is preferred that they are added in the form of a slurry or a solution, and those solubilized in a solvent such as water or glycol, in particular, those solubilized in water and/or ethylene glycol are preferably used.

In the following, an example of a method of dissolving an aluminum compound will be described.

### (1) Preparation example of aqueous solution of basic aluminum acetate

Water is added to basic aluminum acetate, and stirred at less than or equal to 50°C for greater than or equal to 3 hours. The stirring time is more preferably greater than or equal to 6 hours. Then, stirring is conducted at greater than or equal to 60°C for greater than or equal to several hours. The temperature in this case is preferably in the range of 60 to 100°C. The stirring time is preferably greater than or equal to 1 hour. The concentration of the aqueous solution is preferably 10 g/L to 30 g/L, and particularly preferably 15 g/L to 20 g/L.

### (2) Preparation example of ethylene glycol solution of basic aluminum acetate

Ethylene glycol is added to the above aqueous solution. The adding amount of ethylene glycol is preferably a 0.5 to 5-fold amount by volume ratio to the aqueous solution. A 1 to 3-fold amount is more preferred. The solution is stirred at normal temperature for several hours to obtain a uniform water/ethylene glycol mixed solution. Then the solution is heated to distill off water to obtain an ethylene glycol solution. The temperature is preferably greater than or equal to 80°C, and less than or equal to 200°C. More preferably, water is distilled off by stirring at 90 to 150°C for several hours. The pressure of the system may be reduced at the time of distilling off. By the reduced pressure, it is possible to distill off ethylene glycol rapidly at a lower temperature. In other words, under reduced pressure, distilling off is enabled even at less than or equal to 80°C, and heat history given on the system can be further reduced.

### (3) Preparation example of ethylene glycol solution of aluminum lactate

An aqueous solution of aluminum lactate is prepared. Preparation may be conducted under room temperature or under heating, and it is preferably conducted under room temperature. The concentration of the aqueous solution is preferably 20 g/L to 100 g/L, and particularly preferably 50 to 80 g/L. Ethylene glycol is added to the aqueous solution. The adding amount of ethylene glycol is preferably a 1 to 5-fold amount by volume ratio to the aqueous solution. A 2 to 3-fold amount is more preferred. The solution is stirred at normal temperature to obtain a uniform water/ethylene glycol mixed solution, and then the solution is heated to distill off water to obtain an ethylene glycol solution. The temperature is preferably greater than or equal to 80°C, and less than or equal to 120°C. More preferably, water is distilled off by stirring at 90 to 110°C for several hours.

The phosphorus compound is preferably subjected to a heating treatment after dissolution. By the treatment, the polycondensation catalyst activity increases, and the formability of an aluminum-based contaminant decreases, so that it is possible to make Tc2 low. As a solvent used in the heating treatment, at least one solvent selected from the group consisting of water and alkylene glycol may be used without limitation, and a solvent that dissolves a phosphorus compound is preferably used.

As alkylene glycol, a glycol that is a constituting component of the intended polyester such as ethylene glycol is preferably used.

The heating treatment in the solvent is preferably conducted after the phosphorus compound is dissolved, however, the phosphorus compound is not necessarily completely dissolved.

It is not necessary that the compound retains the original structure after the heating treatment, and it is more preferred that the compound is denatured into a structure providing increased solubility in the solvent for improvement of polymerization activity.

The temperature of the heating treatment is not particularly limited, and is preferably in the range of 150 to 200°C, more preferably in the range of 155 to 195°C, further preferably in the range of 160 to 190°C, particularly preferably in the range of 165 to 185°C, and most preferably in the range of 170 to 180°C.

The heating time differs depending on the condition such as the temperature, and in the case of 160°C, it is preferably 3 to 7 hours, and in the case of 200°C, it is preferably 0.2 to 0.5 hours. When the heating time is too short, the polymerization activity may decrease. When the catalyst activity is insufficient, it is sometimes difficult to make Tc1 greater than or equal to 170°C. Too long a heating time may cause increase in the amount of the thermolysis product of the phosphorus compound and decrease in the crystallization temperature at the time of elevating the temperature (Tc1).

The temperature in storing the solution obtained by subjecting the phosphorus compound to the heating treatment is preferably such a low temperature of less than or equal to 100°C. A high temperature may cause increase in the amount of the thermolysis product of the phosphorus compound in a short time and decrease in the crystallization temperature at the time of elevating the temperature (Tc1).

### 4. Polymerization method of polyester

A method for producing a polyester is not particularly limited, and an oligomer of terephthalic acid or the like and a polyhydric alcohol is obtained by a direct esterification method between a polyvalent carboxylic acid including terephthalic acid and a polyhydric alcohol, or by a transesterification method between an alkyl ester such as terephthalic acid and a polyhydric alcohol, and then the oligomer is melt polycondensed under normal pressure or reduced pressure to obtain a polyester. At this time, an esterification catalyst or the above polycondensation catalyst may be used as necessary.

The production of a polyester according to the present invention may be conducted by a method including the steps conventionally known in the art except that the polyester polymerization catalyst composed of an aluminum compound and a phosphorus compound is used as a catalyst, and the following catalyst adding method and polycondensation condition are kept in mind. For example, in the case of producing PET, it is produced by a direct esterification method in which terephthalic acid, ethylene glycol, and other copolymerizing components as necessary are allowed to directly react and esterified by distilling off the water, and then polycondensation is conducted under reduced pressure, or by a transesterification method in which dimethyl terephthalate, ethylene glycol, and other copolymerizing components as necessary are allowed to react and transesterified by distilling off methyl alcohol, and then polycondensation is conducted under reduced pressure. Further, solid-phase polymerization may be conducted as necessary for increasing the intrinsic viscosity. For accelerating the crystallization prior to solid-phase polymerization, the melt-polymerized polyester may be caused to absorb moisture, and then crystallized by heating, or may be crystallized by heating while water vapor is directly sprayed to a polyester chip.

Preferably, the melt polycondensation reaction is conducted in a continuous reaction apparatus. In the continuous reaction apparatus, a reaction vessel for an esterification reaction or a transesterification reaction and a melt polycondensation reaction vessel are connected by piping, and loading of the raw material, transportation into the melt polycondensation reaction vessel through the piping and extraction of a resin from the melt polycondensation reaction vessel are continuously conducted so that the respective reaction vessels do not become empty. In this case, "continuous" does not necessarily require that loading of the raw material to extraction is conducted completely constantly, and may be "intermittent" in which loading of the raw material to extraction is conducted in small portions by an amount of, for example, about one-tenth of the reaction vessel capacity.

In any of these methods, the esterification reaction or transesterification reaction may be conducted in one stage or in multiple stages. The melt polycondensation reaction may be conducted in one stage or in multiple stages. The solid-phase polymerization reaction can be conducted in a continuous apparatus similarly to the melt polycondensation reaction.

By using the continuous reaction apparatus, it is possible to stably obtain a polyester having high Tc1 and low Tc2, however, in a batch system, it is often difficult to obtain such a polyester. This is possibly because the polyester of the previous batch remaining in the reaction apparatus undergoes heat history to increase the degradation product of the catalyst, or is influenced by the degradation product of the resin itself. Further, in the case of a batch system, it is general that a polyester having a different composition and other resins such as polyamide are produced in the same reaction apparatus, and the residues thereof would also influence.

Also, in the case of a batch system, it takes several tens of minutes to several hours to extract the whole quantity of the resin from the reaction apparatus after completion of polyester polymerization, and not only such a problem can arise that degradation of the phosphorus compound proceeds during this time, to cause deterioration in Tc1 and variation in Tc1 within the same lot, but also Tc1 can deteriorate when chips are uniformly mixed as a whole.

Even when a continuous reaction apparatus is used, it can be difficult to stably obtain a polyester having high Tc1 and low Tc2 immediately after starting of production due to the influence of the resin that is previously produced. It is preferred to collect a product with stable quality after a lapse of 24 to 48 hours after starting of the operation or changing of the condition although it depends on the scale and productivity of the apparatus and the previously produced resin.

In the continuous reaction apparatus, it is preferred to produce a polyester on a scale of greater than or equal to 1 ton per hour for taking advantage of its merit. The upper limit is about 50 tons per hour. It is preferred to produce a polyester in the same condition for greater than or equal to 2 days.

### 5. Addition of catalyst

In the present invention, it is important to concurrently add an aluminum compound solution and a phosphorus compound solution. As a method for concurrent addition, a method of adding them separately to the same reaction vessel or piping between reaction vessels, and a method of preliminarily mixing the aluminum compound solution and the phosphorus compound solution into one liquid and adding the liquid are recited. As a method for mixing into one liquid, a method of mixing respective solutions by dunk, and a method of mixing by joining the pipings to which the catalysts are added together in midstream are recited.

When they are added to the reaction vessel, it is preferred to make the stirring of the reaction vessel higher. When they are added to piping between reaction vessels, it is preferred to allow the added catalyst solutions to be immediately mixed uniformly by disposing an in-line mixer or the like.

Among these, for preventing generation of an aluminum-based contaminant in which an aluminum compound is coordinated at a terminal of an oligomer or a monomer of a polyester by allowing rapid binding between the aluminum compound and the phosphorus compound, the method of adding the respective solutions to piping between reaction vessels is preferred in aspect of stirring efficiency. Since even a very small contaminant that is not optically observed greatly influences on acceleration of crystallization, such an aluminum-based contaminant is more likely to be generated when the stirring efficiency is low, and increase in Tc2 and decrease in Tc1 are more likely to occur. This is particularly significant when the aluminum compound solution and the phosphorus compound solution are separately added.

When the aluminum compound solution and the phosphorus compound solution are separately added, plenty of a contaminant coming from the aluminum compound is likely to occur, and Tc1 may be decreased, or Tc2 may be increased, and sufficient catalyst activity may not be obtained. This is attributable to the fact that by concurrently adding the aluminum compound and the phosphorus compound, it is possible to generate a complex of the aluminum compound and the phosphorus compound that gives polymerization activity immediately and unwastefully, however when they are added separately, generation of a complex of the aluminum compound and the phosphorus compound is insufficient, and the aluminum compound that fails to generate a complex with the phosphorus compound precipitates as a contaminant. In particular, increase in Tc2 is attributable to the fact that the aluminum compound precipitating as a contaminant functions as a crystal nucleating agent.

It is also important that the aluminum compound solution and the phosphorus compound solution are added after completion of the esterification reaction or transesterification reaction. Addition before completion of the esterification reaction or transesterification reaction can cause decrease in Tc1. This is attributable to the fact that thermolysis of the phosphorus compound proceeds to increase the degradation product even in the esterification step, as will be described later.

### 6. Polycondensation

For making the phosphorus compound having (B) structure within a specific range, the condition of polycondensation step is an important factor.

Inventors of the present invention closely examined the relation between the polymerization condition of a polyester using a catalyst composed of an aluminum compound and a phosphorus compound and the crystallization temperature, discussed about the cause and the solution, and found that Tc1 varies with the polycondensation temperature and time.

Further, the inventors revealed that the entity that causes variation in Tc1 is a specific degradation product of the phosphorus compound used as a catalyst, and also revealed that by controlling the quantity of the degradation product by optimizing the production condition, it is possible to make the polyester resin produced by using a catalyst composed of an aluminum compound and a phosphorus compound to have a Tc1 of greater than or equal to 170°C and a Tc2 of less than or equal to 175°C that is not conventionally achieved, and found that the polyester resin offers a molded body having high transparency, and allows easy control of crystallization of a mouth plug part when it is used for a heat resistant bottle, and is less susceptible to whitening at the time of heating in molding when it is used for a sheet for molding.

In the following, description will be made.

In the step of polycondensation, the phosphorus compound gradually degrades.

While there are various degradation products of the phosphorus compound, examination made by the present inventors revealed that the one having the following (B) structure in which one t-Bu group is detached from the phosphorus compound of the above (Formula A) largely influences on Tc1.

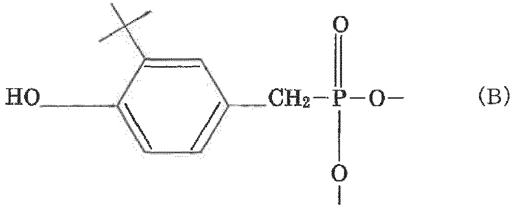

Regarding generation of (B) by degradation, the higher the temperature of polycondensation is and the longer the time is, the more degradation proceeds, and hence it is preferred to make the temperature and the time fall within specific ranges.

That is, the temperature time product represented by [polycondensation temperature - 240] (°C) × polycondensation time (min.) is preferably 1000 to 6500 (°C × min.), more preferably 2000 to 6300 (°C × min.), further preferably 2500 to 6200 (°C × min.), particularly preferably 3000 to 6100 (°C × min.), and most preferably 3500 to 6000 (°C × min.).

When it is more than the above range, the phosphorus compound of (B) structure is more than 11 ppm, and it may be difficult to make Tc1 greater than or equal to 170°C. When it is less than or equal to the above range, melt polycondensation is practically difficult.

Here, a temperature of greater than or equal to 240°C is selected because the temperature at which a significant difference arises in degradation of the phosphorus compound is a temperature of greater than or equal to 240°C during a polycondensation time of 5 to 10 minutes where a significant difference is recognized.

The temperature time product herein is a product of the average residence time in each polycondensation can and the internal temperature of the can, and when a plurality of polycondensation cans are used, the temperature time product is calculated for each reaction can, and the resultant products are summed up. When there is temperature gradient between the part near the inlet and the part near the outlet in the can, the average temperature is adopted.

First, since variation in Tc1 tends to be stabilized by suppressing degradation of the phosphorus compound by lowering the temperature, the temperature of polycondensation is preferably 250 to 285°C, more preferably 255 to 283°C, further preferably 260 to 282°C, particularly preferably 265 to 281°C, and most preferably 270 to 280°C. When it is more than 285°C, degradation rapidly proceeds, and it becomes difficult to stably adjust the quantity of the degradation product by the polycondensation time. When it is less than 250°C, the polycondensation time is too long, and economical production becomes difficult.

The polycondensation time is preferably 50 to 350 minutes, more preferably 90 to 310 minutes, further preferably 120 to 280 minutes, particularly preferably 140 to 260 minutes, and most preferably 150 to 250 minutes. For making it less than or equal to 50 minutes, it is necessary to make the temperature high, and slight temperature variation will influence on the quantity of the degradation product, and production of a polyester resin having stable Tc1 becomes difficult. When it is greater than or equal to 350 minutes, economical production becomes difficult.

Degradation of the phosphorus compound also proceeds during heat treatment and during storage of the solution of the phosphorus compound. In the one experienced the history at a temperature greater than or equal to the above range for a time greater than or equal to the above range in a heat treatment, and the one experienced heat history at a relatively high temperature for a long term during storage, the quantity of the degradation product of the phosphorus compound is increased, and it is preferred to further reduce the temperature time product in the polycondensation condition.

The quantity of degradation product is naturally influenced by the quantity of the phosphorus compound used as a catalyst. When a larger quantity of the phosphorus compound is used, it is preferred to further reduce the temperature time product.

In the case of continuous polycondensation, the temperature can be set by the settings of the reaction can, and the time can be adjusted by the loading amount of the raw material. Further, the speed of polycondensation is adjusted by adjusting the degree of pressure reduction and stirring in the reaction can, and thus polycondensation can be conducted at an intended temperature time product.

For making a melt-polymerized resin having a high IV, it is generally necessary to make the temperature time product large, and there is sometimes the case where the above preferred range is difficult to be satisfied. In such a case, the speed of polycondensation is increased by elevating the degree of pressure reduction or increasing the stirring in the reaction can, and thus polycondensation can be conducted at an intended temperature time product.

### 7. Others

The polyester resin of the present invention may be molded into a hollow-molded body, a film, a sheet-like object, a fiber and other molded bodies by a commonly used melt molding method, or may form a coating on other base materials by melt extrusion.

By stretching a sheet-like object formed of the polyester resin of the present invention at least in a uniaxial direction, the mechanical strength can be improved.

The stretched film formed of the polyester resin of the present invention is formed by stretching a sheet-like object obtained by injection molding or extrusion molding, by any of stretching methods used in ordinary stretching of PET including uniaxial stretching, sequential biaxial stretching and concurrent biaxial stretching. The film may also be formed into a cup shape or a tray shape by pressure molding or vacuum molding.

Among others, the polyester resin is preferably used for a hollow-molded body. Among others, it is preferably used as a bottle for beverage having increased heat resistance as a result of crystallization of a mouth plug part. In this case, the polyester preferably contains 0.1 ppb to 1000 ppm, preferably 0.3 ppb to 100 ppm, more preferably 0.5 ppb to 1 ppm, and further preferably 0.5 ppb to 45 pbb of at least one resin selected from the group consisting of a polyolefin resin, a polyamide resin, a polyacetal resin and a polybutylene terephthalate resin for improving the crystallization characteristic.

As a method for combining the above resin into the polyester resin, methods capable of achieving uniform mixing, such as addition in the polyester production step and dry blending with the polyester after production are preferred, and addition is conducted preferably in the polyester production step, concretely at any point of time in preparing a raw material slurry, in any stage of the esterification reaction or transesterification reaction and in an early stage of the polycondensation reaction step. Also a method of bringing PET chips into contact with a crystalline resin member is a preferred form.

When such a crystalline resin is added to the polyester resin of the present invention, it is possible to obtain a resin having stable Tc1. The effect is significant, in particular, when the crystalline resin is combined into the polyester after production. This is attributable to the fact that when Tc1 of the original polyester resin is less than or equal to 170°C, the amount of the crystalline resin added for achieving 160 to 165°C which is the most preferred Tc1 for crystallization of a mouth plug part is very small and variation in the adding amount is more likely to occur.

The polyester resin of the present invention is formed into chips by, for example, a method of extruding a molten polyester into water through a die pore after completion of melt polycondensation, and cutting the polyester in water, or a method of extruding the polyester into air in the form of a strand through a die pore after completion of melt polycondensation, and then chipping the polyester under cooling with cooling water. The shape of the chip may be any of a cylinder shape, a block shape, a spherical shape and a flat plate shape, and a flat shape is particularly preferred. For example, in the case of a cylinder shape, practically, the length is 1.0 to 4 mm, and the major axis and the minor axis of the cross section are about 1.0 to 4 mm. In the case of a spherical particle, practically, the diameter is 1 to 4 mm.

The weight per one chip is preferably 10 to 50 mg, further preferably 20 to 45 mg, and particularly preferably 25 to 40 mg.

Such chips are supplied while they are accommodated in a container in a unit of greater than or equal to 10 kg. As the container, a paper bag, a metal or paper drum can, a flexible container bag, a special tank and the like are recited. In the case of a paper bag, a bag capable of accommodating 15 to 35 kg, in the case of a drum can, a small drum capable of accommodating 30 to 100 kg and a large drum capable of accommodating 150 to 300 kg, in the case of a flexible container bag, a bag capable of accommodating 0.5 to 2 tons, and in the case of a special tank, a tank lorry of 2 to 30 tons are generally used. Among these, the forms of a flexible container bag and a special tank are preferred.

Further, chips are preferably supplied in a dry state. The moisture percentage of chips is preferably less than or equal to 3000 ppm, further preferably less than or equal to 1000 ppm, and particularly preferably less than or equal to 100 ppm.

As a method for continuous drying, a hopper type through-flow dryer in which polyester chips are fed from the upper part and aeration with a dry gas is effected from the lower part is generally used. In a dryer for drying in a batch system, the drying may be effected under aeration with a dry gas at an atmospheric pressure. In this case, the drying may be conducted by a hopper-shaped dryer in a stationary state, and may be conducted by a rotary blender.

As the dry gas, atmospheric air may be used without any problem, however, from the viewpoint of preventing decrease in the molecular weight by hydrolysis or thermo-oxidative degradation of the polyester, dry nitrogen and dehumidified air are preferred. The drying temperature is about 50°C to about 150°C, and preferably about 60°C to about 140°C, and the drying time is 3 hours to 15 hours, and preferably 4 hours to 10 hours. After drying, the chips are once stocked in a hopper, and then charged into a container to be a product. Since the chips after solid-phase polymerization are in a dry state, further drying is not required. The chips are stocked as they are in the dry state in the hopper.

The polyester resin of the present invention is used preferably as a hollow-molded body for beverage. In particular, it is preferably used as a heat resistant bottle in which a mouth plug part is crystallized by heating.

Also, a sheet for molding is one of preferred uses. This sheet is formed into a cup shape or a tray shape by pressure molding or vacuum molding, and it can be heated at high temperature at the time of molding, and a molded object having a complicated structure can be readily obtained.

### EXAMPLES

In the following, the present invention will be more concretely described by way of examples, however, the present invention is not limited to these examples. Methods for measuring primary characteristic values will be described below.

### (1) Intrinsic viscosity (IV) of polyester resin

The intrinsic viscosity was calculated from a solution viscosity at 30°C in a 1,1,2,2-tetrachloroethane/phenol (2/3 weight ratio) mixed solvent.

### (2) Crystallization temperature of polyester resin (Tc1/Tc2)

Measurement was conducted by using a differential scanning calorimeter (DSC) model TAS100 available from TA Instruments. Into an aluminum pan, 7.5 ± 0.3 mg of a polyester resin was put, and heated to 280°C using a melting point measuring instrument, and retained for 1 minute, and then rapidly cooled by liquid nitrogen. The resultant sample was heated from room temperature to 300°C at a temperature elevation rate of 20°C/min., and the crystallization temperature at the time of elevating the temperature (Tc1) and the melting point (Tm) were measured. Further, after retaining the sample for 2 minutes after the temperature reached 300°C, the sample was cooled at a temperature reduction rate of 10°C/min., and the crystallization temperature at the time of reducing the temperature (Tc2) was measured. Tc1, Tc2, and Tm are temperatures of maximal parts of the respective peaks.

As the sample, five polyester chips of about 30 to 40 mg were finely chopped with a nipper, and from the resultant pieces, one or a combination of pieces was chosen so that the weight was a specific weight, and subjected to measurement. Further, an operation of choosing another sample from the pieces obtained from the same five chips, and subjecting it to measurement was conducted, and measurement was conducted five times in total. Average values of the values obtained in the five measurements are recognized as values of Tc1, Tc2 and Tm.

### (3) Quantification method of aluminum (dry degradation method)

A polyester resin was weighed in a platinum crucible, and carbonized in an electric stove, and then incinerated in a muffle furnace in the condition of 550°C/8 hours. The incinerated sample was subjected to an acid treatment with 6 M hydrochloric acid, and the volume was fixed to 20 mL with 1.2 M hydrochloric acid.

The metal concentration was determined by ICP emission measurement.
Device: CIROS-120 available from SPECTRO
Plasma output: 1400 W
Plasma gas: 13.0 L/min
Auxiliary gas: 2.0 L/min
Nebulizer: Cross flow nebulizer
Chamber: Cyclone chamber
Measurement wavelength: 167.078 nm

### (4) Quantification method of phosphorus (molybdenum blue colorimetric method)

1. Wet degradation by sulfuric acid, nitric acid and perchloric acid was conducted.
2. After the operation of 1., the reaction was neutralized by aqueous ammonia.
3. To the solution prepared in 2., ammonium molybdate and hydrazine sulfate were added.
4. Using an ultraviolet-visible spectrophotometer UV-1700 available from Shimadzu Corporation, the absorbance at a wavelength of 830 nm was measured.

### (5) Hollow container sequential molding evaluation method

A sample polyester was dried in a vacuum dryer to make the moisture percentage less than or equal to 100 ppm, and a bottomed preform (PF) was formed by using an injection molding machine model 150C-DM available from MEIKI CO., Ltd. and a die for preform (die temperature 5°C). Plasticization conditions by the M-150C-DM injection molding machine were set: a feed screw rotation number of 70%, a screw rotation number of 120 rpm, a back pressure of 0.5 MPa, cylinder temperatures of 45°C and 250°C in the order from directly beneath the hopper, and a temperature of the subsequent cylinder part including the nozzle (hereinafter, referred to as Sx) of 290°C. The injection pressure and retention pressure were adjusted so that the weight of the molded product was 28.4 ± 0.2 g.

Then, the mouth plug part of the preform was crystallized by heating by means of a NC-01 mouth plug part crystallizing device available from Frontier, Inc. Further, using a SBO LabN°1045 type 1 Lab blow molding machine available from Sidel, the above preform was blown by biaxial drawing 2.5 folds in the longitudinal direction and 3.8 folds in the circumferential direction at 750 bph in a molding cycle of 30 seconds in a die set at 160°C while air at a pressure of 36 bar was blown therein.

### (6) Haze (Degree of cloudiness: %)

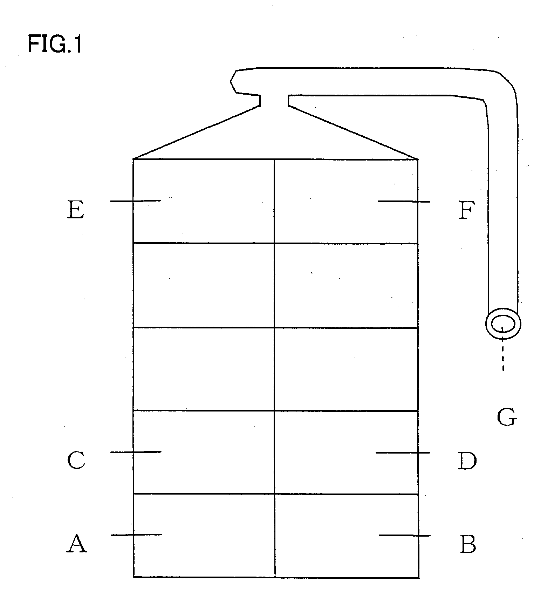

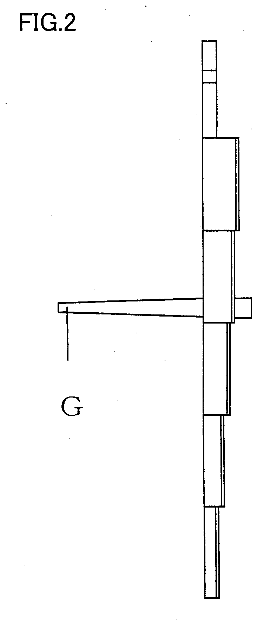

A polyester that was vacuum dried at 140°C for about 16 hours using a vacuum dryer model DP61 available from Yamato Scientific Co., Ltd. was injection-molded by an injection molding machine model M-150C-DM available from MEIKI CO., Ltd. into a stepped molded plate having a gate part (G) and a thicknesses of 2 mm to 11 mm (thickness of A part = 2 mm, thickness of B part = 3 mm, thickness of C part = 4 mm, thickness of D part = 5 mm, thickness of E part = 10 mm, thickness of F part = 11 mm) as shown in Fig. 1 and Fig. 2.

For preventing absorption of moisture during the molding, the molding material hopper was purged with a dry inert gas (nitrogen gas). Plasticization conditions by the M-150C-DM injection molding machine were set: a feed screw rotation number of 70%, a screw rotation number of 120 rpm, a back pressure of 0.5 MPa, cylinder temperatures of 45°C and 250°C in the order from directly beneath the hopper, and a temperature of the subsequent cylinder part including the nozzle of 290°C. As injection conditions, the injection speed and pressure retention speed were 20% or, the injection pressure and retention pressure were adjusted so that the weight of the molded product was 146 ± 0.2 g, and at this time the retention pressure was adjusted to be lower by 0.5 MPa than the injection pressure.

The injection time and the pressure retention time were set so that the respective upper limits were 10 seconds and 7 seconds, and the cooling time was set to 50 seconds, and the total cycle time including the molded product extracting time was set to approximately 75 seconds.

Into the die, cooling water at water temperature of 10°C was constantly introduced to regulate the temperature, and the surface temperature of the die when the molding became stable was approximately 22°C.

A test plate for evaluation of characteristics of the molded product was arbitrarily chosen from stable molded products obtained in the 11th to 18th shots from starting of molding after introducing a molding material and conducting resin replacement.

A plate having a thickness of 5 mm (D part in Fig. 1) was used for haze measurement.

Using a haze meter model NDH2000 available from NIPPON DENSHOKU INDUSTRIES CO., LTD., the haze of a sample was measured.

### (7) Quantification method of amount of thermolysis product (phosphorus compound having (B) structure)

In 2.7 mL of a HFIP + C₆D₆ (1 + 1) mixed solvent, 420 mg of a sample polyester was dissolved, and thereto was added 10 µL of a phosphoric acid 25% deuterioacetone solution, and the mixture was centrifuged. To the supernatant was added 105 to 125 mg of trifluoroacetic acid, and P-NMR measurement was conducted immediately. In the obtained spectrum, a percentage of a value of integral at 32.3 which is a chemical shift value corresponding to a thermolysis product of the corresponding phosphorus compound, with respect to a sum of the value of integral and a value of integral corresponding to another phosphorus compound was determined, and indicated by a molar percentage of the thermolysis product with respect to all the phosphorus compounds. From this value and the value of phosphorus compound amount of (4), the amount of thermolysis product of the corresponding phosphorus compound in the polyester was calculated.

### (8) Amount of aluminum-based contaminant

Into a round-bottomed flask equipped with a stirrer, 30 g of a polyester pellet and 300 mL of a para-chlorophenol/tetrachloroethane (3/1: weight ratio) mixed solution were put, and the pellet was stirred and dissolved in the mixed solution at 100 to 105°C for 2 hours. The solution was allowed to cool to room temperature, and the whole quantity was passed through a membrane filter (PTFE membrane filter, product name: T100A047A available from Advantec) of polytetrafluoroethylene having a diameter of 47 mm and a pore size of 1.0 µm under a pressure of 0.15 MPa to filter off contaminants. The effective filtration diameter was 37.5 mm. Following completion of the filtration, the filter was washed with 300 mL of chloroform, and dried at 30°C for a day and a night under reduced pressure. An aluminum element amount on the filtration surface of the membrane filter was quantified by a scanning fluorescent X-ray analyzer (available from RIGAKU, ZSX100e, Rh line bulb 4.0 kW). Quantification was conducted for the part of 30 mm in diameter in the center of the membrane filter. The calibration curve of the fluorescent X-ray analysis was determined by using a polyethylene terephthalate resin whose aluminum element content was known, and an apparent aluminum element amount was indicated by ppm. Measurement was conducted by measuring the Al-Kα ray intensity under the condition of PHA (pulse height analyzer) 100-300 at an X-ray output of 50 kV-70 mA, using pentaerythritol as a dispersive crystal, and a PC (proportional counter) as a detector. The aluminum element amount in the polyethylene terephthalate resin for calibration curve was quantified by high-frequency inductively-coupled plasma emission spectrometry.

Since the apparent aluminum element amount (ppm) is the content (captured amount) in the membrane filter (mass M: 0.0392g) of the area corresponding to the effective filtration diameter, the value obtained by multiplying the obtained apparent aluminum element amount (ppm) by M, followed by division by the polyester pellet mass (30 g) is referred to as an amount of aluminum-based contaminant (unit: ppb).

### (9) Moisture percentage of polyester chip

A Karl Fischer's micro moisture measuring device model CA-100 and a moisture vaporization device VA-100 available from Mitsubishi Chemical Corporation were used. In the moisture vaporization device VA-100 available from Mitsubishi Chemical Corporation, a heating furnace was heated to 230°C while a nitrogen gas that was preliminarily dried with two drying cylinders (charged with silica gel and phosphorus pentoxide) was caused to flow at a flow rate of 250 mL/min., and a sample board was put into the heating furnace, and after confirming that the dry nitrogen obtained from the heating furnace and the sample board did not contain moisture by a micro moisture measuring device CA-100, 3 g of the sample was accurately weighed in a special sample container that was dried in advance, and immediately put into the sample board. The moisture vaporized from the sample was conveyed to the micro moisture measuring device model CA-100 by dry nitrogen and Karl Fischer titrated and the moisture percentage thereof was determined.

### (10) Average weight of polyester chip

100 particles of chips were taken at random (provided that, those formed from two or more fused particles are excluded) and the weight thereof was measured, and the weight per one particle was determined.

### (Example 1)

### (1) Preparation of aluminum compound

In a preparation tank, a 20 g/L aqueous solution of basic aluminum acetate (hydroxy aluminum diacetate) was charged together with an equivalent amount (volume ratio) of ethylene glycol, and stirred at room temperature for several hours, and then water was distilled off from the system by stirring at 50 to 90°C under reduced pressure (3 kPa) for several hours, to prepare a 20 g/L ethylene glycol solution of an aluminum compound.

### (2) Preparation example of phosphorus compound

As a phosphorus compound, Irgamod 295 (available from BASF) represented by the above (Chemical formula 1) was charged into a preparation tank together with ethylene glycol, and heated at a liquid temperature of 175°C for 2.5 hours under nitrogen substitution and stirring, to prepare a 50 g/L ethylene glycol solution of a phosphorus compound.

### (3) Esterification reaction and polycondensation

In a continuous polyester production apparatus made up of three continuous esterification reactors and three polycondensation reactors, provided with an in-line mixer having a high-speed stirrer in a transfer line from the third esterification reactor to the first polycondensation reactor, a slurry prepared by mixing 0.75 parts by mass of ethylene glycol with 1 part by mass of high-purity terephthalic acid was continuously supplied, and allowed to react at a reaction temperature of the first esterification reactor of 255°C, 170 kPa, at a reaction temperature of the second esterification reactor of 261°C, and at a reaction temperature of the third esterification reactor of 266 to 267°C, to obtain a low-order condensate.

The low-order condensation product was continuously transferred to a continuous polycondensation apparatus made up of three reactors, and polycondensed with an initial stage polymerization reactor having a reaction temperature of 268°C, an intermediate stage polymerization reactor having a reaction temperature of 270°C at 0.567 kPa, and a late stage polymerization reactor having a reaction temperature of 274°C at 0.168 kPa, to obtain PET having an IV of 0.554 dl/g. In this case, the polycondensation time was a total of 190 minutes, and the temperature time product was 5640°C·minutes. The polyester resin was extruded into a strand, and cooled in water, and then cut, and after removing water drops by an oscillation type sieve, the polyester resin was put into a continuous hopper type dryer and dried with a dry nitrogen gas at 140°C for 12 hours. The chips taken out continuously were temporarily stocked in the hopper, and then put into a flexible container bag of 1000 kg to obtain a product form.

As a product, for ensuring a product of high quality by excluding the influence of the previous batch, the one after a lapse of greater than or equal to 30 hours after starting of the operation or after changing of the condition was collected.

From the in-line mixer, the ethylene glycol solution of an aluminum compound prepared as described above was added so that the residual amount after completion of polycondensation was 15 ppm by aluminum atoms with respect to the mass of the obtained polyester resin, and the ethylene glycol solution of a phosphorus compound was added so that the residual amount after polycondensation was 45 ppm by phosphorus atoms with respect to the mass of the obtained polyester resin.

The chip had a barrel shape having a cross section of 2.5 mm in miner axis and 3.0 mm in major axis, and a length of 3.3 mm (average value measured for 10 particles by means of calipers), and the average weight was 36.2 mg. The water content was 50 ppm.

Evaluation results of PET obtained in this manner are shown in Table 1.

### (Comparative Example 1)

PET having an IV of 0.544 dl/g was obtained in a similar manner to Example 1 except that an initial stage polymerization reactor having a reaction temperature of 275°C, an intermediate stage polymerization reactor having a reaction temperature of 278°C at 1.394 kPa, and a late stage polymerization reactor having a reaction temperature of 282°C at 0.234 kPa were used. The polycondensation time at this time was a total of 190 minutes, and the temperature time product was 7050°C·minutes.

Evaluation results of PET obtained in this manner are shown in Table 1.

### (Comparative Example 2)

PET having an IV of 0.563 dl/g was obtained in a similar manner to Example 1 except that an initial stage polymerization reactor having a reaction temperature of 276°C, an intermediate stage polymerization reactor having a reaction temperature of 282°C at 1.589 kPa, and a late stage polymerization reactor having a reaction temperature of 284°C at 0.3 kPa were used. The polycondensation time at this time was a total of 190 minutes, and the temperature time product was 7400°C-minutes.

Evaluation results of PET obtained in this manner are shown in Table 1.

### (Example 2)

PET having an IV of 0.578 dl/g was obtained in a similar manner to Example 1 except that an initial stage polymerization reactor having a reaction temperature of 269°C, an intermediate stage polymerization reactor having a reaction temperature of 272°C at 0.450 kPa, and a late stage polymerization reactor having a reaction temperature of 275°C at 0.115 kPa were used. The polycondensation time at this time was a total of 190 minutes, and the temperature time product was 5870°C·minutes.

Evaluation results of PET obtained in this manner are shown in Table 1.

### (Example 3)

PET having an IV of 0.578 dl/g was obtained in a similar manner to Example 1 except that the rotation number of the in-line mixer was set higher. The polycondensation time at this time was a total of 190 minutes, and the temperature time product was 5640°C·minutes.

Evaluation results of PET obtained in this manner are shown in Table 1.

### (Example 4)

PET having an IV of 0.565 dl/g was obtained in a similar manner to Example 3 except that three continuous esterification reactors and two polycondensation reactors were used, and an initial stage polymerization reactor having a reaction temperature of 270°C and a late stage polymerization reactor having a reaction temperature of 275°C were used. The polycondensation time at this time was a total of 130 minutes, and the temperature time product was 4100°C·minutes.

Evaluation results of PET obtained in this manner are shown in Table 1.

### (Example 5)

PET having an IV of 0.558 dl/g was obtained in a similar manner to Example 3 except that an initial stage polymerization reactor having a reaction temperature of 269°C, an intermediate stage polymerization reactor having a reaction temperature of 275°C at 0.567 kPa, and a late stage polymerization reactor having a reaction temperature of 280°C and 0.168 kPa were used. The polycondensation time at this time was a total of 190 minutes, and the temperature time product was 6190°C·minutes.

Evaluation results of PET obtained in this manner are shown in Table 1.

### (Example 6)

PET having an IV of 0.563 dl/g was obtained in a similar manner to Example 1 except that an ethylene glycol solution of a phosphorus compound was added so that the residual amount after completion of polycondensation was 55 ppm by phosphorus atoms with respect to the mass of the obtained polyester resin. The polycondensation time at this time was a total of 190 minutes, and the temperature time product was 5640°C·minutes.

Evaluation results of PET obtained in this manner are shown in Table 1.

### (Example 7)

PET having an IV of 0.568 dl/g was obtained in a similar manner to Example 6 except that three continuous esterification reactors and two polycondensation reactors were used, and an initial stage polymerization reactor having a reaction temperature of 270°C and a late stage polymerization reactor having a reaction temperature of 275°C were used. The polycondensation time at this time was a total of 130 minutes, and the temperature time product was 4100°C·minutes.

Evaluation results of PET obtained in this manner are shown in Table 1.

### (Example 8)

PET having an IV of 0.620 dl/g was obtained in a similar manner to Example 3 except that the degree of vacuum at the time of polycondensation and the rotation number of the in-line mixer were set higher. The polycondensation time at this time was a total of 190 minutes, and the temperature time product was 5640°C·minutes.

Evaluation results of PET obtained in this manner are shown in Table 1.

### (Example 9)

PET obtained in Example 3 was solid-phase polycondensed by an ordinary method, to obtain PET having an IV of 0.720 dl/g. The polycondensation time at this time was a total of 190 minutes, and the temperature time product was 5640°C·minutes.

Evaluation results of PET obtained in this manner are shown in Table 1.

### (Example 10)

PET having an IV of 0.556 dl/g was obtained in a similar manner to Example 1 except that as the acid component, 98.5 parts by mass of high-purity terephthalic acid and 1.5 parts by mass of isophthalic acid were mixed. The polycondensation time at this time was a total of 190 minutes, and the temperature time product was 5640°C·minutes.

Evaluation results of PET obtained in this manner are shown in Table 1.

### (Example 11)

PET having an IV of 0.551 dl/g was obtained in a similar manner to Example 1 except that an ethylene glycol solution of a phosphorus compound was added so that the residual amount after completion of polycondensation was 30 ppm by phosphorus atoms with respect to the mass of the obtained polyester resin. The polycondensation time at this time was a total of 190 minutes, and the temperature time product was 5640°C·minutes.

Evaluation results of PET obtained in this manner are shown in Table 1.

### (Comparative Example 3)

PET having an IV of 0.552 dl/g was obtained in a similar manner to Example 1 except that an ethylene glycol solution of an aluminum compound was added to the second esterification reactor. The polycondensation time at this time was a total of 190 minutes, and the temperature time product was 5640°C·minutes.

Evaluation results of PET obtained in this manner are shown in Table 1.

### (Comparative Example 4)

PET having an IV of 0.557 dl/g was obtained in a similar manner to Example 1 except that the polycondensation time was 240 minutes. At this time, the pressure in the intermediate stage polymerization reactor was 0.7 kPa, the pressure in the late stage polymerization reactor was 0.23 kPa, and the temperature time product was 7120°C·minutes.

Evaluation results of PET obtained in this manner are shown in Table 1.

### (Comparative Example 5)

PET having an IV of 0.553 dl/g was obtained in a similar manner to Example 1 except that an ethylene glycol solution of an aluminum compound was added so that the residual amount after completion of polycondensation was 10 ppm by aluminum atoms with respect to the mass of the obtained polyester resin, and an ethylene glycol solution of a phosphorus compound was added so that the residual amount after completion of polycondensation was 15 ppm by phosphorus atoms with respect to the mass of the obtained polyester resin. The polycondensation time at this time was a total of 190 minutes, and the temperature time product was 5640°C·minutes.

Evaluation results of PET obtained in this manner are shown in Table 1.

**Table 1**

| Item | IV [dl/g] | Tc1 [°C] | Tc2 [°C] | Al [ppm] | Phosphorus [ppm] | Temperature time product [°C·min] | Haze [%] | Thermolysis product [ppm] | Al contaminant [ppb] |
|---|---|---|---|---|---|---|---|---|---|
| Example 1 | 0.554 | 178.5 | 172.5 | 17 | 47 | 5640 | 8.0 | 7.9 | 29.4 |
| Comparative Example 1 | 0.544 | 165.0 | 171.0 | 16 | 46 | 7050 | 6.8 | 11.5 | 27.4 |
| Comparative Example 2 | 0.563 | 151.5 | 170.0 | 17 | 48 | 7400 | 4.0 | 12.4 | 26.1 |
| Example 2 | 0.578 | 175.0 | 173.0 | 15 | 44 | 5870 | 9.9 | 8.8 | 30.1 |
| Example 3 | 0.560 | 182.3 | 170.1 | 16 | 46 | 5640 | 4.5 | 7.7 | 26.3 |
| Example 4 | 0.565 | 187.1 | 170.2 | 14 | 47 | 4100 | 5.5 | 6.9 | 26.4 |
| Example 5 | 0.558 | 171.4 | 170.0 | 17 | 44 | 6190 | 4.8 | 10.7 | 26.1 |
| Example 6 | 0.563 | 171.1 | 165.1 | 15 | 53 | 5640 | 4.2 | 10.2 | 19.7 |
| Example 7 | 0.568 | 180.2 | 165.3 | 14 | 54 | 4100 | 4.5 | 8.1 | 20.0 |
| Example 8 | 0.620 | 178.3 | 170.2 | 16 | 47 | 5640 | 5.2 | 7.7 | 26.4 |
| Example 9 | 0.720 | 182.1 | 170.1 | 15 | 44 | 5640 | 5.0 | 8.3 | 26.3 |
| Example 10 | 0.556 | 175.2 | 172.2 | 17 | 45 | 5640 | 6.5 | 8.0 | 29.0 |
| Example 11 | 0.551 | 177.3 | 172.0 | 14 | 28 | 5640 | 6.3 | 5.5 | 28.7 |
| Comparative Example 3 | 0.552 | 172.2 | 180.1 | 16 | 46 | 5640 | 31.5 | 7.8 | 304.7 |
| Comparative Example 4 | 0.557 | 168.1 | 170.2 | 15 | 44 | 7120 | 8.5 | 11.2 | 26.4 |
| Comparative Example 5 | 0.553 | 172.0 | 178.6 | 10 | 15 | 5640 | 20.3 | 4.0 | 102.7 |

Since the polyester resins obtained in Examples 1 to 11 contain 5 to 11 ppm of the phosphorus compound (thermolysis product) having (B) structure, Tc1 is greater than or equal to 170°C, and by combining a very small amount of a crystalline resin, they can be easily controlled to have an optimum Tc1 (for example, 160 to 165°C) in response to a request from the market. In addition, since the aluminum-based contaminant is less than or equal to 100 ppb, transparency of the obtained molded body is sufficiently satisfactory. Since the polyester resins obtained in Comparative Examples 1 and 2 contain more than 11 ppm of the phosphorus compound (thermolysis product) having (B) structure, and have low Tc1, it is impossible to control Tc1 arbitrarily in response to a request from the market. As shown in the following examples, the polyester resin obtained in Comparative Example 4 is difficult to be controlled to have an optimum Tc1 (for example, 160 to 165°C). In the polyester resins obtained in Comparative Examples 3 and 5, the aluminum-based contaminant is more than 100 ppb, and hence transparency of the obtained molded body is not at a satisfactory level.

### (Examples 12 to 22, Comparative Examples 6 and 7)

In SUS piping having a diameter of 20 cm and a length of 5 m (on the inner surface in the lower part of the piping, a sheet of low-density polyethylene is pasted along a specific length) that was inclined at 45 degrees, polyester resin chips obtained in Examples 1 to 11 and Comparative Examples 3 and 4 were allowed to drop, and thus a contact treatment of making a very small amount of a polyethylene adhere on the surface of polyester chips was conducted. The target Tc1 in the case of a preform of a bottle was around 165°C, and the length of the polyethylene sheet pasted on the inner surface of the piping was adjusted so as to achieve this value, and for the one whose Tc1 before polyethylene adhesion was greater than or equal to 175°C, the sheet length was set at 1.5 m, for the one whose Tc1 before polyethylene adhesion was 170 to 175°C, the sheet length was set at 1.0 m, and for the one whose Tc1 before polyethylene adhesion was less than 170°C, the sheet length was set at 30 cm.

From the polyester resin after the contact treatment, a preform was formed by the method of (5). 10 preforms were taken out at random, and samples were cut out from a mouth plug part, and Tc1 was measured. From one preform, samples were taken in three points, and Tc1 was measured, and the average value of these three points was taken as Tc1. The average, the maximum value and the minimum value of Tc1 of 10 preforms were determined.

Also for the polyester resin after the contact treatment, similar evaluations were made. The results are shown in Table 2.

**[Table 2]**

| | PET used in contact treatment | Preform Tc1 average value [°C] | Preform Tel minimum value [°C] | Preform Tc1 maximum value [°C] | Haze [%] | Thermolysis product [ppm] | Al contaminant [ppb] |
|---|---|---|---|---|---|---|---|
| Example 12 | Example 1 | 164.3 | 163.3 | 165.4 | 7.8 | 8.0 | 29.5 |
| Example 13 | Example 2 | 164.0 | 163.2 | 165.6 | 8.8 | 8.7 | 30.0 |
| Example 14 | Example 3 | 166.3 | 165.3 | 167.5 | 4.6 | 7.9 | 26.5 |
| Example 15 | Example 4 | 166.7 | 166.0 | 168.1 | 5.0 | 6.7 | 26.2 |
| Example 16 | Example 5 | 164.5 | 163.5 | 166.2 | 5.0 | 10.8 | 26.2 |
| Example 17 | Example 6 | 164.3 | 163.2 | 166.1 | 4.5 | 10.1 | 19.6 |
| Example 18 | Example 7 | 166.2 | 165.5 | 167.0 | 4.7 | 8.3 | 20.2 |
| Example 19 | Example 8 | 165.5 | 164.4 | 166.7 | 5.0 | 7.5 | 26.2 |
| Example 20 | Example 9 | 166.0 | 165.1 | 167.2 | 5.5 | 8.4 | 26.4 |
| Example 21 | Example 10 | 163.9 | 163.0 | 165.0 | 6.3 | 7.9 | 28.9 |
| Example 22 | Example 11 | 165.2 | 164.1 | 166.2 | 6.0 | 5.7 | 28.9 |
| Comparative Example 6 | Comparative Example 3 | 163.8 | 163.1 | 165.3 | 33.5 | 7.6 | 304.5 |
| Example Comparative Example 7 | Comparative Example 4 | 164.7 | 163.7 | 167.5 | 4.3 | 11.3 | 26.5 |

In Examples 12 to 22, there was little variation with respect to the target Tc1, and control to a preferred Tc1 was possible. The phosphorus compound (thermolysis product) having (B) structure was 5 to 11 ppm, and the aluminum-based contaminant was 100 ppb, and transparency of the molded body was also at a satisfactory level.

In Comparative Example 7, since the amount of the phosphorus compound (thermolysis product) having (B) structure was somewhat large, there was large variation with respect to the target Tc1, and satisfactory Tc1 control could not be achieved. This is attributable to the fact that adhesion of polyethylene in the contact treatment was not stable because the amount of the combined polyethylene was very small. In Comparative Example 6, transparency was not at a satisfactory level.

The polyester resin of the present invention keeps high transparency of the molded body when it is sequentially polymerized and produced on a commercial scale, and provides a polyester that allows easy control of crystallization of a mouth plug part when it is used for a heat resistant bottle, and is less susceptible to whitening at the time of heating in molding when it is used as a sheet for molding, and thus greatly contributes to the industry.

## Claims

1. A polyester resin obtained by using an aluminum compound and a phosphorus compound as a polymerization catalyst, containing greater than or equal to 85% by mol of an ethylene terephthalate structural unit, wherein the content of an aluminum-based contaminant is less than or equal to 100 ppb, and the content of a phosphorus compound represented by the following (B) structure is 5 to 11 ppm, with respect to the mass of the polyester resin, wherein the content of the aluminum-based contaminant and the content of the phosphorous compound represented by the following (B) structure are determined according to the methods indicated in the description,
wherein the phosphorous compound represented by (B) is a thermolysis product at the time of polymerization of the polyester using an aluminum compound and a phosphorous compound represented by the following chemical formula (A) as a catalyst: 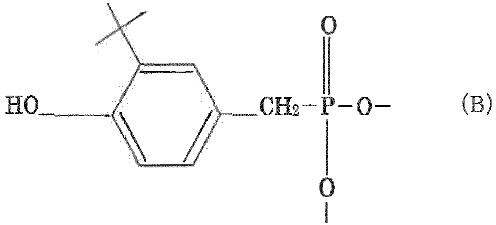 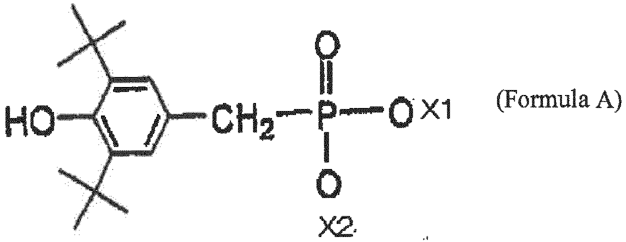
(wherein in (Formula A), X1 and X2 each represent hydrogen, an alkyl group having 1 to 4 carbon atoms, or a metal having a valence of greater than or equal to 1),
and wherein the polyester resin has a Tc1 of greater than or equal to 170°C and a Tc2 of less than or equal to 175°C, wherein Tc1 and Tc2 are determined according to the method indicated in the description, wherein Tc1 is the crystallization temperature at the time of elevating the temperature, and Tc2 is the crystllization temperature at the time of reducing the temperature.

2. The polyester resin according to claim 1, wherein the phosphorus compound used as a polymerization catalyst is a phosphorus compound represented by the following chemical formula (Formula A), and the quantity of phosphorus atoms in all the phosphorus compounds including the phosphorus compound represented by the following chemical formula (Formula A), and the phosphorus compound represented by said (B) structure which is a thermolysis product thereof contained in the polyester resin is 20 to 65 ppm with respect to the mass of the polyester resin, wherein the quantity of phosphorus atoms is determined according to the method indicated in the description: 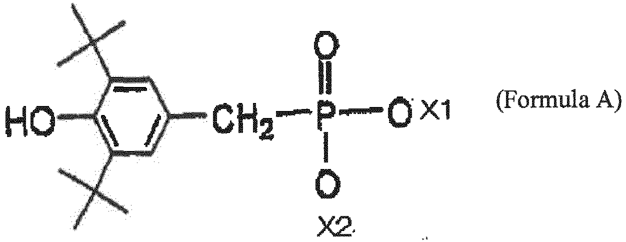 (wherein in (Formula A), X1 and X2 each represent hydrogen, an alkyl group having 1 to 4 carbon atoms, or a metal having a valence of greater than or equal to 1).

3. The polyester resin according to claim 1 or 2, wherein the ratio P/A1 (molar ratio) between aluminum atoms in the aluminum compound, and phosphorus atoms in all the phosphorus compounds including the phosphorus compound represented by the chemical formula (Formula A) and the phosphorus compound represented by said (B) structure which is a thermolysis product thereof contained in the polyester resin is 1.4 ≤ P/Al ≤ 100, wherein the quantity of phosphorus atoms and the quantity of aluminum atoms are determined according to the methods indicated in the description.

## Patentansprüche

1. Polyesterharz, erhalten unter Verwendung einer Aluminiumverbindung und einer Phosphorverbindung als einen Polymerisationskatalysator, enthaltend mehr als oder gleich 85 Mol-% einer Ethylenterephthalat-Struktureinheit, wobei der Gehalt an einer Verunreinigung auf Aluminiumbasis weniger als oder gleich 100 ppb ist, und der Gehalt einer Phosphorverbindung, dargestellt durch die nachstehende (B)-Struktur, 5 bis 11 ppm beträgt, bezogen auf die Masse des Polyesterharzes, wobei der Gehalt der Verunreinigung auf Aluminiumbasis und der Gehalt der Phosphorverbindung, dargestellt durch die nachstehende (B)-Struktur, gemäß den in der Beschreibung angegebenen Verfahren bestimmt werden,
wobei die Phosphorverbindung, dargestellt durch (B), ein Thermolyseprodukt zum Zeitpunkt der Polymerisation des Polyesters unter Verwendung einer Aluminiumverbindung und einer Phosphorverbindung, dargestellt durch die nachstehende chemische Formel (A), alsen ein Katalysator ist: 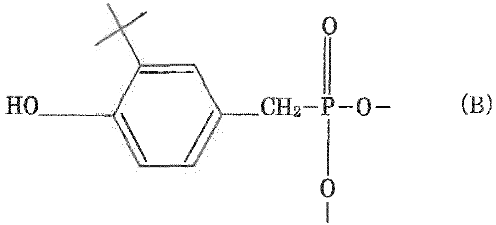 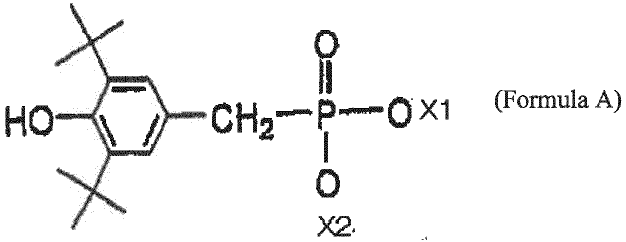
(wobei in (Formel A) X1 und X2 jeweils Wasserstoff, eine Alkylgruppe mit 1 bis 4 Kohlenstoffatomen oder ein Metall mit einer Wertigkeit von größer als oder gleich 1 darstellen),
und wobei das Polyesterharz eine Tc1 von größer als oder gleich 170°C und eine Tc2 von kleiner als oder gleich 175°C aufweist, wobei Tc1 und Tc2 gemäß dem in der Beschreibung angegebenen Verfahren bestimmt werden, wobei Tc1 die Kristallisationstemperatur zum Zeitpunkt der Erhöhung der Temperatur ist und Tc2 die Kristallisationstemperatur zum Zeitpunkt der Verringerung der Temperatur ist.

2. Polyesterharz nach Anspruch 1, wobei die als Polymerisationskatalysator verwendete Phosphorverbindung eine Phosphorverbindung ist, die durch die nachstehende chemische Formel (Formel A) dargestellt wird, und die Menge der Phosphoratome in allen Phosphorverbindungen einschließlich der Phosphorverbindung, die durch die nachstehende chemische Formel (Formel A) dargestellt wird, und der durch die (B)-Struktur dargestellten Phosphorverbindung, die ein Thermolyseprodukt davon ist, die in dem Polyesterharz enthalten sind, 20 bis 65 ppm beträgt, bezogen auf die Masse des Polyesterharzes, wobei die Menge der Phosphoratome gemäß dem in der Beschreibung angegebenen Verfahren bestimmt wird: 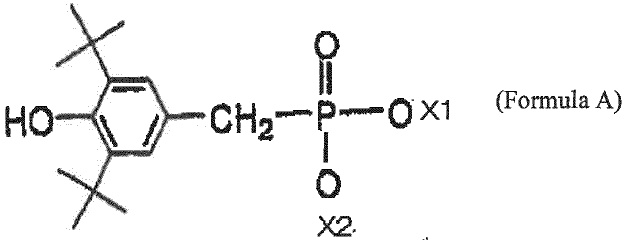 (wobei in (Formel A) X1 und X2 jeweils Wasserstoff, eine Alkylgruppe mit 1 bis 4 Kohlenstoffatomen oder ein Metall mit einer Wertigkeit von größer als oder gleich 1 darstellen).

3. Polyesterharz nach Anspruch 1 oder 2, wobei das Verhältnis P/Al (Molverhältnis) zwischen Aluminiumatomen in der Aluminiumverbindung und Phosphoratomen in allen Phosphorverbindungen, einschließlich der Phosphorverbindung, die durch die chemische Formel (Formel A) dargestellt wird, und der Phosphorverbindung, die durch die (B)-Struktur dargestellt wird und ein Thermolyseprodukt davon ist, die in dem Polyesterharz enthalten sind, 1,4 ≤ P/Al ≤ 100 beträgt, wobei die Menge an Phosphoratomen und die Menge an Aluminiumatomen gemäß den in der Beschreibung angegebenen Verfahren bestimmt werden.

## Revendications

1. Résine polyester obtenue par utilisation d'un composé de l'aluminium et d'un composé du phosphore comme catalyseur de polymérisation, contenant 85% en moles ou plus d'une unité structurale téréphtalate d'éthylène, dans laquelle la teneur en contaminant à base d'aluminium est inférieure ou égale à 100 ppb, et la teneur en composé du phosphore représenté par la formule (B) se situe dans l'intervalle allant de 5 à 11 ppm, par rapport à la masse de la résine polyester, dans laquelle la teneur en contaminant à base d'aluminium et la teneur en composé du phosphore représenté par la formule (B) sont déterminées selon les procédés mentionnés dans la description,
dans laquelle le composé du phosphore représenté par la formule (B) est le produit de thermolyse au moment de la polymérisation du polyester par utilisation d'un composé de l'aluminium et d'un composé du phosphore représenté par la formule chimique (A) suivante comme catalyseur : 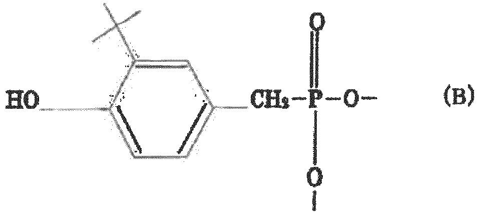 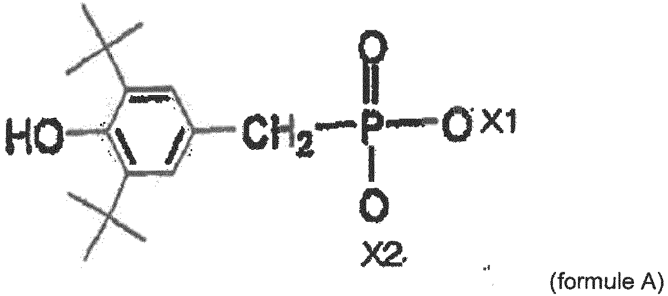
(dans laquelle dans la (formule A), X1 et X2 représentent chacun hydrogène, un groupe alkyle ayant 1 à 4 atomes de carbone, ou un métal ayant une valence supérieure ou égale à 1),
et dans laquelle la résine polyester a une Tc1 supérieure ou égale à 170°C et une Tc2 inférieure ou égale à 175°C, dans laquelle Tc1 et Tc2 sont déterminées selon le procédé mentionné dans la description, où Tc1 est la température de cristallisation au moment de l'élévation de la température et Tc2 est la température de cristallisation au moment de la réduction de température.

2. Résine polyester selon la revendication 1, dans laquelle le composé du phosphore utilisé comme catalyseur de polymérisation est un composé du phosphore représenté par la formule chimique suivante (formule A), et la quantité d'atomes de phosphore dans tous les composés du phosphore, y compris le composé du phosphore représenté par la formule chimique suivante (formule A), et le composé du phosphore représenté par ladite structure (B), qui est le produit de thermolyse de celui-ci, présents dans la résine polyester se situe dans l'intervalle allant de 20 à 65 ppm par rapport à la masse de résine polyester, dans laquelle la quantité d'atomes de phosphore est déterminée par le procédé mentionné dans la description : 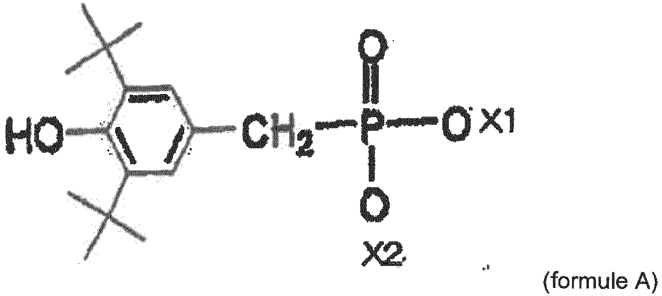 (dans laquelle dans la (formule A), X1 et X2 représentent chacun hydrogène, un groupe alkyle ayant 1 à 4 atomes de carbone, ou un métal ayant une valence supérieure ou égale à 1)

3. Résine polyester selon la revendication 1 ou 2, dans laquelle le rapport P/AI (rapport molaire) entre les atomes d'aluminium dans le composé de l'aluminium, et les atomes de phosphore dans tous les composés du phosphore, y compris le composé du phosphore représenté par la formule chimique (formule A), et le composé du phosphore représenté par ladite structure (B), qui est le produit de thermolyse de celui-ci, contenus dans la résine polyester est 1,4 s P/AI ≤ 100, dans laquelle la quantité des atomes de phosphore et la quantité des atomes d'aluminium sont déterminées selon les procédés mentionnés dans la description.
